# EUROPÄISCHE PATENTSCHRIFT

(11) **EP 3 628 895 B1**
(45) Veröffentlichungstag und Bekanntmachung des Hinweises auf die Patenterteilung: **03.11.2021**
(21) Anmeldenummer: 19199615.6
(22) Anmeldetag: 25.09.2019
(51) Int. Cl.: F16H 61/4017

(54) **HYDROSTATISCHER ANTRIEB FÜR EIN KRAFTFAHRZEUG**
HYDROSTATIC DRIVE FOR A MOTOR VEHICLE
ENTRAINEMENT HYDROSTATIQUE POUR UN VÉHICULE AUTOMOBILE

(30) Priorität: 28.09.2018 DE 102018124017
(43) Veröffentlichungstag der Anmeldung: 01.04.2020
(73) Patentinhaber: MAN Truck & Bus SE, 80995 München (DE)
(72) Erfinder: Beierer, Philipp, 85302 Gerolsbach (DE); Resch, Franz-Georg, 82299 Türkenfeld (DE)
(74) Vertreter: v. Bezold & Partner Patentanwälte - PartG mbB

(56) Entgegenhaltungen:
- DE-A1- 3 934 641
- DE-A1-102017 204 462
- US-A- 4 140 196

## Beschreibung

Die Erfindung betrifft einen hydrostatischen Antrieb für ein Kraftfahrzeug nach dem Oberbegriff des Anspruchs 1.

Aus dem Stand der Technik sind Nutzfahrzeuge bekannt, die zumindest zwei hydraulische Radmotoren zum Antreiben von zumindest zwei Rädern aufweisen. Die zumindest zwei Radmotoren sind in einen geschlossenen hydrostatischen Kreislauf integriert. Damit können gegenüber Fahrzeugen mit permanentem Allradantrieb erhebliche Gewichts- und Effizienzvorteile realisiert werden, insbesondere in Fahrzeugen, bei denen der Allradantrieb nur für einen kleinen Teil der tatsächlichen Fahrtstrecke benötigt wird.

Beispielsweise offenbart die Druckschrift EP 1 886 861 A2 ein Antriebssystem, umfassend eine herkömmliche mechanisch über eine Antriebswelle angetriebene Hinterachse, wobei die Antriebswelle mit einem Achsdifferential der Hinterachse 9 in Wirkverbindung steht. Das Antriebssystem umfasst ferner einen hydrostatischen Antrieb, mit zumindest zwei mittels hydraulischer Radmotoren RM antreibbaren Vorderrädern, die lenkbar an einer Vorderachse angeordnet sind. Die zwei Radmotoren RM sind in einen geschlossenen hydrostatischen Kreislauf integriert. Dabei wird eine Hauptpumpe mechanisch über den mechanischen Triebstrang des Fahrzeugs angetrieben. Durch ein Steuerventil können die zwei Radmotoren RM zugeschaltet werden. Außerdem kann eine Speisepumpe angeordnet sein, um auftretende interne und externe Leckagemengen zu kompensieren.

Die Druckschrift DE 10 2017 204 462 A1 offenbart einen hydrostatischen Fahrantrieb mit variabel einstellbaren Druckbegrenzungsventilen, um den Fahrkomfort beim Bremsbetrieb zu erhöhen.

Derartige bekannte hydrostatische Antriebe beruhen auf dem Prinzip, dass der hydrostatische Antrieb die betreffende Achse drehzahlsynchron zur mechanisch angetriebenen Achse antreibt. Aus physikalischen Gründen kann dieser Zustand nicht für alle Fahrzustände aufrechterhalten werden; in der Regel ist der optimale Betriebspunkt für die Geradeausfahrt ausgelegt. Fährt das Fahrzeug einen Radius, legen die einzelnen Räder der mindestens zwei Achsen unterschiedliche Strecken zurück. Folglich liegt bei einem solchen Fahrmanöver auch keine synchrone Raddrehzahl der Räder vor. Da bei einem hydrostatischen Antrieb mit Konstantmotor(en) und Konstantpumpe die Raddrehzahlen direkt den Volumenstrom durch die Verdrängereinheiten beeinflusst, kommt es z. B. bei Kurvenfahrt zu einer hydraulischen Längsverspannung des Antriebsstranges. Letzteres äußert sich durch einen je nach Lenkwinkel signifikanten Druckaufbau in einem Ast des Hochdruckkreises. Ist die Radsummendrehzahl der hydrostatischen Achse größer als die Radsummendrehzahl der Achse, welche über ein festes Verhältnis mit der Drehzahl der Hochdruckpumpe gekoppelt ist, dann handelt es sich hier immer um die Rücklaufleitung, d. h. im Sinne des Ölflusses um die Leitung von den Radmotoren zur Hochdruckpumpe. Umgekehrt, ist die Radsummendrehzahl der hydrostatischen Achse kleiner als die Radsummendrehzahl der Achse, welche über ein festes Verhältnis mit der Drehzahl der Hochdruckpumpe gekoppelt ist, dann handelt es sich bei der Arbeitsleitung um die Vorlaufleitung, d. h. im Sinne des Ölflusses um die Leitung von der Hochdruckpumpe zu den Radmotoren.

Druckspitzen sind für die Robustheit und Zuverlässigkeit von Hydrauliksystemen nicht förderlich und sollten daher soweit als möglich vermieden werden. Prinzipbedingt verursacht eine Abweichung der Soll-Fördermenge durch Hochdruckpumpe und Hydraulikmotor(en) einen Druckgradienten im Hydrauliksystem. Bei der Hochdruckpumpe stützt sich das entsprechende Moment über den Antrieb ab; der Hydraulikmotor bzw. die Hydraulikmotoren erzeugen ein Moment durch die Interaktion des Rades mit dem Untergrund. Kommt es aufgrund der Abrollkinematik des Fahrzeugs zu einer Längsverspannung, z. B. bei Kurvenfahrt, so hat dies einen unter Umständen unerwünschten Einfluss auf das Fahrverhalten des Fahrzeugs, da die hydrostatische Achse bremsend oder antreibend wirkt.

Es ist somit eine Aufgabe der Erfindung, einen verbesserten hydrostatischen Antrieb für ein Kraftfahrzeug bereitzustellen, mit dem Nachteile herkömmlicher Techniken vermieden werden können. Die Aufgabe der Erfindung ist es insbesondere, einen hydrostatischen Antrieb für ein Kraftfahrzeug bereitzustellen, mit dem Druckspitzen im hydrostatischen Kreislauf vermieden oder zumindest reduziert werden können. Im Weiteren soll die Erfindung sicherstellen, dass sich im Hydrauliksystem kein bzw. nur ein stark abgemilderter Druck aufgrund der Kurvenkinematik des Fahrzeugs aufbauen kann. Schließlich erlaubt die Erfindung eine Reduktion des Systemdrucks, falls nicht plausible Drehzahlen an der hydrostatischen Achse festgestellt werden. Somit ist sichergestellt, dass der Schlupf an der hydrostatischen Achse innerhalb tolerierbarer Grenzen bleibt und die jeweiligen Räder entsprechend weiterhin Kräfte an den Untergrund übertragen können.

Diese Aufgaben werden durch einen hydrostatischen Antrieb mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein hydrostatischer Antrieb für ein Kraftfahrzeug, insbesondere für ein Nutzfahrzeug, bereitgestellt. Das Nutzfahrzeug kann beispielsweise ein Lastkraftwagen oder ein Omnibus sein.

Der hydrostatische Antrieb umfasst in an sich bekannter Weise einen Hydraulikkreislauf (Hochdruckkreis), welcher eine von einem mechanischen Antriebsstrang angetriebene Hydropumpe (Hydraulikpumpe), vorzugsweise in Form einer Hydrokonstantpumpe, und mindestens einen Hydromotor (Hydraulikmotor), vorzugsweise in Form eines Hydrokonstantmotors, zum Antrieb einer hydrostatisch angetriebenen Achse aufweist. Das Kraftfahrzeug umfasst ferner eine mechanisch angetriebene Achse, welche über ein festes Verhältnis mit der Drehzahl der Hochdruckpumpe gekoppelt ist.

Der Hydraulikkreislauf umfasst ferner eine erste Arbeitsleitung und eine zweite Arbeitsleitung. Die erste und die zweite Arbeitsleitung verbinden jeweils die Hydropumpe und den mindestens einen Hydromotor miteinander. Hierbei bildet die erste Arbeitsleitung in einem Vorwärtsfahrbetrieb die Vorlaufleitung für Fluid von der Hydropumpe zu dem mindestens einen Hydromotor und die zweite Arbeitsleitung in einem Vorwärtsfahrbetrieb die Rücklaufleitung für Fluid von dem mindestens einen Hydromotor zu der Hydropumpe.

Gemäß allgemeinen Gesichtspunkten der Erfindung umfasst der Hydraulikkreislauf ferner ein variabel einstellbares erstes Druckbegrenzungsventil, mittels dessen ein Fluidstrom in der ersten Arbeitsleitung steuerbar ist, und ein variabel einstellbares zweites Druckbegrenzungsventil, mittels dessen ein Fluidstrom in der zweiten Arbeitsleitung steuerbar ist.

Ein Druckbegrenzungsventil dient dazu, den maximal zulässigen Systemdruck zu begrenzen, um das Hydrauliksystem gegen zu hohen Druck abzusichern (Überdruckabsicherung) und Schäden zu vermeiden. Übersteigt der Druck im Hydraulikkreislauf einen gewünschten (eingestellten) Wert, ermöglicht ein Druckbegrenzungsventil einen Abfluss der Hydraulikflüssigkeit, z. B. zum Vorrat oder zum Speisekreis. Der maximale Systemdruck wird unter anderem durch die einzelnen Komponenten des Systems bestimmt. Der durch ein Druckbegrenzungsventil abgesicherte Maximalwert ist so festgelegt, dass es im Betrieb zu keiner Schädigung oder einem Versagen von Systemkomponenten kommt. Praktisch wird der maximale Systemdruck durch ein oder mehrere Druckbegrenzungsventile abgesichert. Der Absicherungs- oder Maximaldruck ist ein fest eingestellter Wert, welcher sich durch eine oder mehrere Federn mit bestimmter Vorspannung und Federhärte sowie gegebenenfalls Wirkflächen, auf welche ein Fluiddruck wirkt, definiert.

Bei einem variabel einstellbaren Druckbegrenzungsventil ist der Öffnungsdruck (auch als Auslösedruck bezeichnet) des Druckbegrenzungsventils von null (kein Widerstand) bis zu einem Maximalwert variabel einstellbar. Letztgenannter Wert dient als Absicherung und wird im Allgemeinen über ein mechanisches Bauteil, z. B. eine vorgespannte Feder, realisiert. Das variabel einstellbare erste und/oder zweite Druckbegrenzungsventil kann als ein solches Ventil mit den zwei Betriebszuständen "offen" und "geschlossen" (bis Grenzdruck) ausgeführt sein oder kann als proportionalgeregeltes Druckventil ausgeführt sein, mit dem beliebige Zwischenschritte von offen bis zum Grenzdruck dargestellt werden können.

Ein besonderer Vorzug des erfindungsgemäßen hydrostatischen Antriebs liegt darin, dass im Fahrbetrieb der Öffnungsdruck des ersten Druckbegrenzungsventils und der Öffnungsdruck des zweiten Druckbegrenzungsventils für unterschiedliche Fahrsituationen zweckmäßig angepasst werden können, um das Auftreten von unerwünschten Druckspitzen zu vermeiden. So kann in Fahrsituationen, in denen mit einem unerwünschten Druckaufbau in einer der Arbeitsleitungen gerechnet werden muss, der Öffnungsdruck des einstellbaren Druckbegrenzungsventils der jeweiligen Arbeitsleitung abgesenkt werden bzw. das Druckbegrenzungsventil geöffnet werden, so dass sich in der jeweiligen Arbeitsleitung bzw. dem jeweiligen Ast des Hydraulikkreislaufs keine Druckspitze oder kein unerwünscht hohes Druckniveau ausbilden kann.

Es ist besonders vorteilhaft, wenn das erste und/oder zweite Druckbegrenzungsventil ein elektrisch betätigbares Druckbegrenzungsventil ist, d. h. ein Druckbegrenzungsventil, bei dem ein Öffnungsdruck über einen elektrischen Steueranschluss des Druckbegrenzungsventils einstellbar ist.

Der hydrostatische Antrieb kann ferner einen Speisekreis zur Speisung des Hydraulikkreislaufs aufweisen, um auftretende interne und externe Leckagemengen zu kompensieren bzw. einen Ausgleich für bewusst ausgeleitetes Öl aus dem geschlossenen Kreis zu ermöglichen. Der Speisekreis kann eine mit einem Vorrat an Hydraulikflüssigkeit fluidisch verbundene Speisepumpe aufweisen. Der Speisekreis kann ein drittes Druckbegrenzungsventil aufweisen, um zu vermeiden, dass von der Speisepumpe ein zu hoher Druck erzeugt wird. Das dritte Druckbegrenzungsventil ist vorzugsweise stromab der Speisepumpe im Speisekreis angeordnet. Der Öffnungsdruck des dritten Druckbegrenzungsventils kann auf einen Wert unter 100bar eingestellt sein, vorzugweise auf einen Wert im Bereich von 5 und 35 bar. Das dritte Druckbegrenzungsventil ist vorzugsweise nicht variabel einstellbar, d. h. der Wert des Öffnungsdruck des dritten Druckbegrenzungsventil ist festgelegt und nicht veränderbar.

Gemäß einer Ausführungsform kann eine Niederdruckseite des variabel einstellbaren ersten und/oder zweiten Druckbegrenzungsventils in den Speisekreis münden, insbesondere in einen Abschnitt des Speisekreises, der stromab der Speisepumpe angeordnet ist.

Bei dieser Variante bestimmt das dritte Druckbegrenzungsventil den kleinsten möglichen Druck im Rücklauf des Hochdruckkreises. Hier ist es vorteilhaft, dass das entsprechende einstellbare erste und/oder zweite Druckbegrenzungsventil als untere Schwelle für den Öffnungsdruck den Wert des Öffnungsdrucks des dritten Druckbegrenzungsventils einnimmt. Gemäß einer alternativen Ausführungsform der Erfindung ist eine Niederdruckseite des variabel einstellbaren ersten und/oder zweiten Druckbegrenzungsventils mit einem Vorrat an Hydraulikflüssigkeit, z. B. in Form eines Hydraulikflüssigkeitsbehälters oder -tanks, fluidisch verbunden. Beispielsweise kann die Niederdruckseite der variabel einstellbaren Druckbegrenzungsventile über eine Leitung in den Vorrat an Hydraulikflüssigkeit münden. Bei dieser Ausführungsform kann das erste und/oder zweite Druckbegrenzungsventil jeweils auf einen Öffnungsdruck eingestellt werden, der kleiner ist als der Öffnungsdruck eines einer Speisepumpe nachgeschalteten Druckbegrenzungsventils, z. B. des dritten Druckbegrenzungsventils.

Der hydrostatische Antrieb umfasst ferner eine Steuereinrichtung, mittels derer jeweils ein Öffnungsdruck des ersten Druckbegrenzungsventils und ein Öffnungsdruck des zweiten Druckbegrenzungsventils einstellbar ist. Die Steuereinrichtung ist vorzugsweise über elektrische Signalleitungen jeweils mit einem elektrischen Steuereingang der einstellbaren Druckbegrenzungsventile (erstes und zweite Druckbegrenzungsventil) verbunden. Mittels der Steuereinrichtung können somit das erste Druckbegrenzungsventil und das zweite Druckbegrenzungsventil unabhängig voneinander wahlweise in eine Öffnungsstellung oder eine Schließstellung gebracht werden. Ferner kann die Steuereinrichtung ausgeführt sein, einen Wert des Öffnungsdrucks des ersten und/oder zweiten Druckbegrenzungsventils wahlweise zu erhöhen oder zu verringern.

Erfindungsgemäß ist die Steuereinrichtung ausgeführt, während eines Zugbetriebs des Kraftfahrzeugs den Öffnungsdruck des zweiten Druckbegrenzungsventils zu verringern. Hierbei wird der Öffnungsdruck vorzugsweise auf einen Wert unter 100bar, weiter vorzugsweise auf einen Wert unterhalb von 35 bar abgesenkt.

Dies bietet den Vorteil, dass der eingangs beschriebene, bei Kurvenfahrt im Zugbetrieb auftretende Druckaufbau in der zweiten Arbeitsleitung (Rücklaufleitung) vermieden werden kann. Kommt es nämlich im Zugbetrieb zu einer Kurvenfahrt, ist der Öffnungsdruck des zweiten Druckbegrenzungsventils bereits auf einen entsprechend zweckmäßig verringerten Wert eingestellt, um den Aufbau von ungewollten Druckspitzen zu verhindern.

Bei einer Variante, bei der eine Niederdruckseite des ersten und/oder zweiten Druckbegrenzungsventils in den Speisekreis mündet, d. h. nicht direkt in den Hydraulikvorrat mündet, kann die Steuereinrichtung ausgeführt sein, während eines Zugbetriebs des Kraftfahrzeugs den Öffnungsdruck des zweiten Druckbegrenzungsventils auf den gleichen Öffnungsdruck einzustellen wie das dritte Druckbegrenzungsventil.

Bei einer Variante, bei der eine Niederdruckseite des ersten und/oder zweiten Druckbegrenzungsventils dagegen mit dem Hydraulikvorrat fluidisch verbunden ist, kann die Steuereinrichtung ausgeführt sein, während eines Zugbetriebs des Kraftfahrzeugs das zweite Druckbegrenzungsventil auf einen Öffnungsdruck einzustellen, der kleiner oder gleich dem Öffnungsdruck des dritten Druckbegrenzungsventils ist. Der Öffnungsdruck des zweiten Druckbegrenzungsventils kann bei dieser Variante beispielsweise auf null Bar im Zugbetrieb eingestellt werden.

Anstatt die vorgenannten Anpassungen generell im Zugbetrieb vorzunehmen, so dass dann bei Auftreten einer Kurvenfahrt im Zugbetrieb bereits die angepasst Ventilstellung des Druckbegrenzungsventils eingestellt ist, besteht natürlich auch die Möglichkeit, erst bei Auftreten der Kurvenfahrt die Anpassung des Öffnungsdrucks des Druckbegrenzungsventils vorzunehmen. Eine weitere Möglichkeit der erfindungsgemäßen Realisierung sieht daher vor, dass die Steuereinrichtung ausgeführt ist, das zweite Druckbegrenzungsventil, d. h. das Druckbegrenzungsventil im Rücklauf, zu öffnen und/oder einen Öffnungsdruck des Druckbegrenzungsventils auf einen verringerten Wert einzustellen, falls während eines Zugbetriebs des Kraftfahrzeugs eine Radsummendrehzahl der hydrostatisch angetriebenen Achse größer ist als eine Radsummendrehzahl einer von dem mechanischen Antriebsstrang angetriebenen Achse, welche über ein festes Verhältnis mit der Drehzahl der Hochdruckpumpe gekoppelt ist und der Lenkwinkel, aufgelöst durch z. B. einen Lenkwinkelsensor, eine Kurvenfahrt signalisiert. Bei dieser Variante wird der Öffnungsdruck des zweiten Druckbegrenzungsventils nur bei Kurvenfahrten im Zugbetrieb angepasst. Die Radsummendrehzahl einer bestimmten Achse ist die Summe der Raddrehzahlen an den Rädern dieser bestimmten Achse.

Das zweite Druckbegrenzungsventil kann durch eine entsprechende Ansteuerung durch die Steuereinrichtung so lange offen gehalten werden, bis der Zugbetrieb beendet und/oder bis die Radsummendrehzahl der hydrostatisch angetriebenen Achse nicht mehr größer als die Radsummendrehzahl der vom mechanischen Antriebsstrang angetriebenen Achse ist und der Lenkwinkel, z. B. aufgelöst durch einen Lenkwinkelsensor, eine Kurvenfahrt signalisiert.

Diese Ausführungsformen bieten ebenfalls den Vorteil, dass der eingangs beschriebene, bei Kurvenfahrt im Zugbetrieb auftretende Druckaufbau in der zweiten Arbeitsleitung (Rücklaufleitung) vermieden werden kann.

Bei einer vorteilhaften Variante dieser Ausführungsform ist die Steuereinrichtung ausgeführt, im Zugbetrieb auch das erste Druckbegrenzungsventil bedarfsgerecht zu öffnen und/oder dessen Öffnungsdruck auf einen verringerten Wert einzustellen. Als Steuersignal kann beispielsweise ein Abgleich der individuellen Raddrehzahlen dienen. Dreht eines der Räder der hydrostatisch angetriebenen Achse schneller als theoretisch berechnet, d. h. die Ist-Drehzahl eines Rades der hydrostatischen Achse ist größer als seine Soll-Drehzahl, dann liegt an diesem Rad ein erhöhter Reibschlupf vor, d. h. dieses Rad kann nichts zum Vortrieb und sehr begrenzt zur Seitenführung des Fahrzeugs beitragen. In der Arbeitsleitung, d. h. im Vorlauf, stellt sich entsprechend der reduzierten Last nur ein geringer Druck ein. Falls während eines Zugbetriebs des Kraftfahrzeugs eine Ist-Drehzahl eines Rades der hydrostatisch angetriebenen Achse eine Soll-Drehzahl des gleichen Rades übersteigt, wird durch Öffnen des ersten Druckbegrenzungsventils bzw. Absenken des Auslösedrucks des Druckbegrenzungsventils im Vorlauf dem geschlossenen Kreis Öl entnommen. Folgend gelangt weniger Öl zu den hydrostatischen Radmotoren; die zugeführte Ölmenge beeinflusst direkt proportional die Drehzahl der hydrostatischen Radmotoren. Bedingt durch die reduzierte Ölmenge verlangsamt sich das zu schnell drehende Rad. Dies wird so lange fortgeführt, bis an jedem Rad der hydrostatischen Achse die Ist-Raddrehzahl mit der Soll-Raddrehzahl übereinstimmt. Bei Zielerreichung liegt ein gewünschter Radschlupf vor, d. h. die hydrostatische Achse kann durch den reduzierten Auslösedruck des Druckbegrenzungsventils wieder eine Vortriebs- und Seitenführungskraft aufbauen bzw. diese auf das Gesamtfahrzeug bezogen erhöhen.

Die Soll-Drehzahlen der Räder einer Achse können in an sich bekannter Weise berechnet werden. Beispielsweise basieren die theoretischen Drehzahlen der Räder (Soll-Drehzahlen der Räder) der hydrostatischen Achse auf den kinematischen Randbedingungen, d. h. Radstand bzw. Distanz zwischen hydrostatischer Achse zu mechanisch angetriebener Achse, welche über ein festes Verhältnis mit der Hochdruckpumpe gekoppelt ist, Spurweite bzw.

Abstand zwischen linkem und rechtem Radaufstandspunkt je Achse, Kurvenradius bzw. gemittelter Lenkwinkel des Fahrzeugs, und tatsächlicher Fahrgeschwindigkeit des Fahrzeugs. Die tatsächliche Fahrgeschwindigkeit wird an dieser Stelle z. B. über den digitalen Tachographen bestimmt.

Um im Schubbetrieb eine Bremswirkung übertragen zu können, bleibt das zweite Druckbegrenzungsventil normalerweise geschlossen, d. h. der Öffnungsdruck des zweiten Druckbegrenzungsventil ist im Schubbetrieb auf einen nichtverringerten Wert eingestellt, d. h. in der Regel auf einen Wert oberhalb von 100bar. Generell wird der Druck im Rücklauf von der übertragenen Bremskraft der Achse definiert. Diese ist wiederum eine Funktion der Reibwerte an den verschiedenen Achsen. Angenommen, der Schlupf ist konstant, dann ist auch der Druck im Rücklauf konstant. Fährt das Fahrzeug nun eine Kurve, so würde sich der Druck im Rücklauf zusätzlich erhöhen, bedingt durch die schnellere Raddrehzahl an der hydrostatisch angetriebenen Achse im Vergleich zu der mechanisch angetriebenen Achse, welche über ein festes Verhältnis die Hochdruckpumpe antreibt. Bei einer Kurvenfahrt addiert sich somit zum Druck bedingt durch ein Bremsmoment an der hydrostatischen Vorderachse der Druckaufbau, welcher durch die Kinematik bei Kurvenfahrt zu Stande kommt.

Gemäß einer bevorzugten Ausführungsform kann die Steuereinrichtung ausgeführt sein, während eines Schubbetriebs des Kraftfahrzeugs den Öffnungsdruck des ersten Druckbegrenzungsventils zu verringern. Hierbei wird der Öffnungsdruck vorzugsweise auf einen Wert unter 100bar, weiter vorzugsweise auf einen Wert unterhalb von 35 bar, abgesenkt. Diese Ausführungsform bietet den Vorteil, dass über das zweite Druckbegrenzungsventil das Bremsmoment an der hydrostatischen Achse unabhängig vom Lenkwinkeleinschlag eingestellt bzw. begrenzt werden kann.

Bei einer Variante, bei der eine Niederdruckseite des ersten und/oder zweiten Druckbegrenzungsventils in den Speisekreis, d. h. nicht direkt in den Hydraulikvorrat, mündet, kann die Steuereinrichtung ausgeführt sein, während eines Schubbetriebs des Kraftfahrzeugs das erste Druckbegrenzungsventil auf den gleichen Öffnungsdruck zu stellen wie das dritte Druckbegrenzungsventil. Bei einer Variante, bei der eine Niederdruckseite des ersten und/oder zweiten Druckbegrenzungsventils dagegen mit dem Hydraulikvorrat fluidisch verbunden ist, kann die Steuereinrichtung ausgeführt sein, während eines Schubbetriebs des Kraftfahrzeugs das erste Druckbegrenzungsventil auf einen Öffnungsdruck zu stellen, der kleiner oder gleich dem Öffnungsdruck des dritten Druckbegrenzungsventils ist.

Anstatt die vorgenannten Anpassungen generell im Schubbetrieb vorzunehmen, so dass dann bei Auftreten einer Kurvenfahrt im Schubbetrieb bereits die angepasst Ventilstellung des Druckbegrenzungsventils eingestellt ist, besteht natürlich auch die Möglichkeit, erst bei Auftreten der Kurvenfahrt die Anpassung des Öffnungsdrucks des ersten Druckbegrenzungsventils vorzunehmen. Eine weitere Möglichkeit der erfindungsgemäßen Realisierung sieht daher vor, dass die Steuereinrichtung ausgeführt ist, während eines Schubbetriebs und falls eine Radsummendrehzahl der hydrostatisch angetriebenen Achse größer als eine Radsummendrehzahl einer von der Brennkraftmaschine mechanisch angetriebenen Achse ist, und wenn der Lenkwinkel, z. B. aufgelöst durch einen Lenkwinkelsensor, eine Kurvenfahrt signalisiert, den Öffnungsdruck des ersten Druckbegrenzungsventils zu verringern.

Ferner kann die Steuereinrichtung ausgeführt sein, den Auslösedruck des zweiten Druckbegrenzungsventils zu reduzieren, falls während eines Schubbetriebs des Kraftfahrzeugs eine Ist-Drehzahl eines Rades der hydrostatischen Achse eine Soll-Drehzahl des gleichen Rades unterbietet. Analog zu der korrespondierenden Maßnahme im Zugbetrieb, wie vorstehend beschrieben, kann hierdurch eine Abweichung vom gewünschten Radschlupf schneller reduziert werden, so dass die Ist-Drehzahl des Rades schneller wieder auf die Soll-Drehzahl rückgeführt werden kann.

Ferner kann die Steuereinrichtung ausgeführt sein, das erste und/oder das zweite Druckbegrenzungsventil kurzzeitig bzw. teilweise in eine Offenstellung zu bringen, um kurvenfahrtbedingte oder schlupfbedingte Schwankungen des Drucks im Hydraulikkreislauf auszugleichen. Die Steuereinrichtung kann hierzu beispielsweise ausgeführt sein, das Druckbegrenzungsventil bei Überschreitung eines Solldrucks solange zu öffnen, bis der Druck in der Rücklaufleitung wieder unter den Solldruck gefallen ist. Beispielsweise kann als Solldruck der zuletzt gemessene Druckwert im Rücklauf bzw. in der zweiten Arbeitsleitung, der vor Beginn eines Lenkvorgangs gemessen wurde, festgelegt werden.

Bei einer vorteilhaften Variante dieser Ausgestaltungsform ist die Steuereinrichtung ferner ausgeführt, den einzuregelnden Solldruck in Abhängigkeit von einem bestimmten momentanen oder vorhergesagten Schlupfwert anzupassen, vorzugsweise derart, dass eine Abweichung einer Ist-Drehzahl eines Rads der hydrostatischen Achse von einer Soll-Drehzahl reduziert wird.

Diese Variante bietet den Vorteil, dass nicht nur kurvenfahrtbedingte, sondern auch schlupfbedingte Druckspitzen ausregelt werden. Ein aktueller Schlupfwert kann beispielweise aus dem Vergleich der gemessenen Raddrehzahlen der Vorderräder und der Hinterräder bestimmt werden oder durch Vergleich einer Ist-Drehzahl eines Rades mit der Soll-Drehzahl des Rades, wie vorstehend bereits beschrieben wurde. Eine Veränderung des Schlupfwerts kann beispielsweise anhand der sich verändernden Fahrbahnsteigung vorhergesagt werden. Anhand von Straßenkartendaten kann ein Verlauf der Fahrbahnneigung der vorausliegenden Fahrtstrecke ermittelt werden. Ändert sich beispielsweise der Neigungswinkel der Fahrbahn, kann die Steuereinrichtung anhand der veränderten Achslasten die zu erwartenden Schlupfwerte an den Achsen bestimmen und entsprechend den einzuregelnden Drucksollwert für das variabel einstellbare Druckbegrenzungsventil nach oben oder unten korrigieren, um einer Abweichung des Drucks im Rücklauf vom Solldruck entgegenzuwirken.

Die vorstehenden Ausführungsvarianten sind besonders vorteilhaft für den Fall, dass die hydrostatisch angetriebene Achse ferner eine Lenkachse des Fahrzeugs ist und die mechanisch angetriebene Achse eine nicht lenkbare Achse ist. In diesem Fall legen bei Kurvenfahrt die Räder der hydrostatischen Achse in Summe einen größeren Weg zurück als die Räder der mechanischen Achse.

Handelt es sich bei der mechanisch angetriebenen Achse, welche starr an die Hochdruckpumpe gekoppelt ist, jedoch um eine Lenkachse und bei der hydrostatischen Achse um eine nicht lenkbare Achse, dann legen bei Kurvenfahrt die Räder der mechanischen Achse in Summe einen größeren Weg zurück, als die Räder der hydrostatischen Achse. Die nachfolgenden Ausführungsvarianten beziehen sich daher auf diesen Anwendungsfall, d. h. die mechanisch angetriebene Achse ist eine Lenkachse und die hydrostatische Achse ist eine nicht lenkbare Achse.

Gemäß einer weiteren Ausführungsform kann die Steuereinrichtung ausgeführt sein, einen Öffnungsdruck des ersten Druckbegrenzungsventils auf einen verringerten Wert einzustellen und/oder das erste Druckbegrenzungsventil zu öffnen, falls während eines Zugbetriebs des Kraftfahrzeugs die IST-Radsummendrehzahl der hydrostatisch angetriebenen Achse kleiner ist als eine Radsummendrehzahl einer von dem mechanischen Antriebstrang angetriebenen Achse, welche über ein festes Verhältnis mit der Drehzahl der Hochdruckpumpe gekoppelt ist.

Bei Zugbetrieb und einer Radsummendrehzahl der hydrostatisch angetriebenen Achse, die kleiner ist als eine Radsummendrehzahl einer von dem mechanischen Antriebstrang angetriebenen Achse, liefert die Hydropumpe theoretisch mehr Öl, als die Radmotoren schlucken können. Entsprechend baut sich in der Vorlaufleitung zusätzlich zum Antriebsschlupf (Zugbetrieb) ein Druck bedingt durch die kurvenfahrtbedingte Drehzahldiskrepanz auf. Durch teilweises Öffnen des ersten Druckbegrenzungsventils kann an dieser Stelle der Druck limitiert werden. Dies ist dann sinnvoll, wenn z. B. durch reduzierte Reibwerte an der hydrostatisch angetriebenen Achse nicht so viel Kraft wie erwartet übertragen werden kann. Somit kann ein Durchdrehen der Räder an der hydrostatischen Achse verhindert werden.

Gemäß einer weiteren Ausführungsform kann die Steuereinrichtung ferner ausgeführt sein, das zweite Druckbegrenzungsventil zu öffnen und/oder dessen Öffnungsdruck auf einen verringerten Wert einzustellen, falls während eines Schubbetriebs des Kraftfahrzeugs eine Radsummendrehzahl der hydrostatisch angetriebenen Achse kleiner ist als eine Radsummendrehzahl einer von der Brennkraftmaschine angetriebenen Achse und falls ein Rad der hydrostatisch angetriebenen Achse blockiert oder zu blockieren droht. Ob ein Rad der hydrostatisch angetriebenen Achse blockiert oder zu blockieren droht, kann beispielsweise von Raddrehzahlsensoren abgefragt werden, die z. B. einem Antiblockiersystem zugeordnet sind.

Dies bietet den Vorteil, dass durch die Reduktion des Drucks im Rücklauf ein unerwünschtes Blockieren eines Rads der hydrostatischen Achse verhindert wird.

Gemäß einer bevorzugten Ausführungsform kann die Steuereinrichtung im weiteren ausgeführt sein, das erste Druckbegrenzungsventil zu öffnen, falls während einer Kurvenfahrt und Schubbetrieb des Kraftfahrzeugs eine Radsummendrehzahl der hydrostatisch angetriebenen Achse kleiner ist als eine Radsummendrehzahl einer von der Brennkraftmaschine angetriebenen Achse.

Diese Ausführungsform hat den Vorteil, dass im Schubbetrieb bei Kurvenfahrt es nicht zu einem unerwünschten Druckanstieg in der Vorlaufleitung kommt. Entsprechend hat der Lenkwinkel keinen Einfluss auf ein Bremsmoment an der hydrostatischen Achse.

Die nachfolgenden Ausführungen gelten für beide Fälle, d. h. die hydrostatische Achse kann eine Lenkachse sein oder eine nicht lenkbare Achse sein.

Unter einem Zugbetrieb wird vorliegend ein Betriebszustand verstanden, bei dem das Fahrzeug vom Motor bzw. Getriebe angetrieben wird. Unter einem Schubbetrieb wird der Betriebszustand bezeichnet, bei dem, in einem nicht getrennten Kraftschluss, das Fahrzeug einschließlich des Motors bzw. Getriebes durch das Fahrzeug selbst in Drehbewegung gehalten wird. Dies kann z. B. bei einer Bergabfahrt der Fall sein.

Der mindestens eine Hydromotor kann zwei hydraulische Radmotoren umfassen. Beispielsweise kann eine vordere lenkbare Achse des Kraftfahrzeugs durch zwei hydraulische Radmotoren angetrieben sein. Ferner kann die hydrostatisch angetriebene Achse - in Vorwärtsfahrtrichtung des Kraftfahrzeugs gesehen - vor oder hinter einer von dem mechanischen Antriebsstrang angetriebenen Achse angeordnet sein, welche über ein festes Verhältnis mit der Drehzahl der Hochdruckpumpe gekoppelt ist. Die hydrostatisch angetriebene Achse kann eine lenkbare Achse sein.

Die Erfindung betrifft ferner ein Kraftfahrzeug, insbesondere ein Nutzfahrzeug, mit einem hydrostatischen Antrieb, wie in diesem Dokument beschrieben.

Weitere Einzelheiten und Vorteile der Erfindung werden im Folgenden unter Bezug auf die beigefügten Zeichnungen beschrieben. Es zeigen:
- Figur 1: einen hydrostatischen Antrieb gemäß einer Ausführungsform der Erfindung; und
- Figur 2: einen hydrostatischen Antrieb gemäß einer weiteren Ausführungsform der Erfindung.

Gleiche oder funktional äquivalente Elemente sind in allen Figuren mit denselben Bezugszeichen bezeichnet.

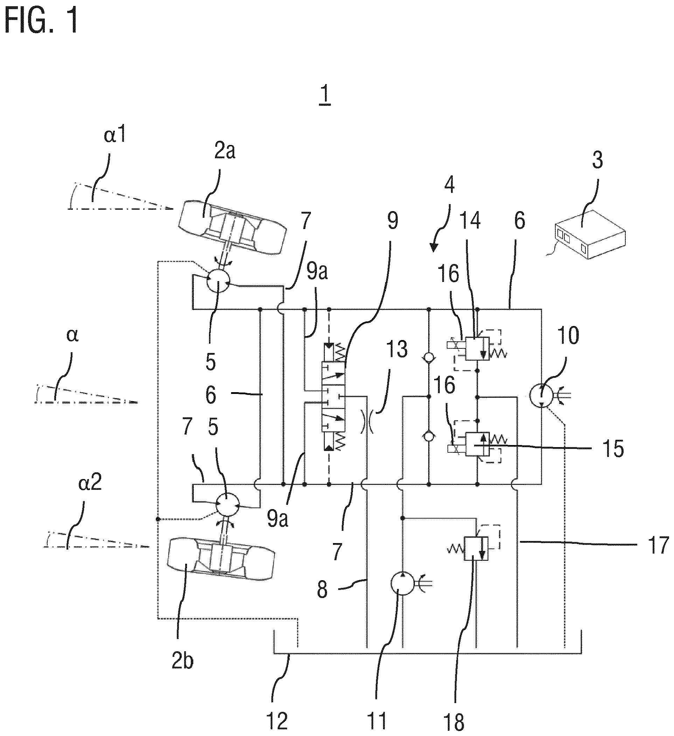

Figur 1 zeigt einen hydrostatischen Antrieb 1 eines Nutzfahrzeugs gemäß einer Ausführungsform der Erfindung. Der hydrostatische Antrieb 1 umfasst einen Hydraulikkreislauf 4, welcher eine von einem mechanischen Antriebsstrang angetriebene Hydropumpe 10 umfasst.

Aus dem Stand der Technik sind verschiedene Arten bekannt, die Hydropumpe 10, z. B. eine Hydrokonstantpumpe, über den mechanischen Antriebsstrang anzutreiben. Die Erfindung ist nicht auf eine bestimmte Umsetzung beschränkt. Beispielsweise kann die Hydropumpe radgetrieben sein und über eine feste mechanische Übersetzung mit den Rädern einer mechanisch angetriebenen Achse verbunden sein. Zwischen dieser Achse und der Hydrokonstantpumpe ist eine Kupplung, z. B. eine Lamellen-Lastschaltkupplung vorgesehen. Bei einer weiteren Variante kann beispielsweise die Brennkraftmaschine des Fahrzeugs (bzw. eine Kurbelwelle der Brennkraftmaschine) über eine Kupplung treibend mit einer Eingangswelle eines leistungsverzweigenden Umlaufrädergetriebes verbunden sein. Das Umlaufrädergetriebe, z. B. in Form eines Planetengetriebes, zweigt die über die Eingangswelle eingehende Leistung in einen hydrostatischen und in einen mechanischen Leistungszweig auf. Insbesondere treibt eine erste Ausgangswelle des Umlaufrädergetriebes unmittelbar ein Ausgleichsgetriebe einer ersten Achse an und bildet damit den mechanischen Leistungszweig. Eine zweite Ausgangswelle des Umlaufrädergetriebes treibt über eine Zahnradstufe die Hydropumpe 10 an und bildet damit den hydrostatischen Leistungszweig.

Die Hydropumpe 10 treibt wiederum über den Hydraulikkreislauf 4 die Hydraulikmotoren an, die vorliegend in Form zweier hydraulischer Radmotoren 5 vorgesehen sind. Über die Radmotoren 5 werden die beiden Räder 2a, 2b einer lenkbaren Vorderachse angetrieben. Im vorliegenden Fall ist die hydrostatisch angetriebene Achse somit eine lenkbare Achse.

Der Hydraulikkreislauf 4 umfasst eine erste Arbeitsleitung 6, die einen ersten Ast bildet, um die Hydropumpe 10 und die beiden hydraulischen Radmotoren 5 miteinander zu verbinden. Der Hydraulikkreislauf 4 umfasst ferner eine zweite Arbeitsleitung 7, die einen zweiten Ast bildet, um die Hydropumpe 10 und die beiden hydraulischen Radmotoren 5 miteinander zu verbinden. Je nach Strömungsrichtung der Hydraulikflüssigkeit bildet der erste Ast einen Vorlauf und der zweite Ast einen Rücklauf des Hydraulikkreises 4 oder umgekehrt.

Vorliegend ist die Hydropumpe so eingerichtet, dass die erste Arbeitsleitung 6 (oberer Ast in Figur 1) in einem Vorwärtsfahrbetrieb die Vorlaufleitung für Fluid von der Hydropumpe 10 hin zu den beiden Radmotoren 5 bildet. Entsprechend bildet die zweite Arbeitsleitung 7 in einem Vorwärtsfahrbetrieb die Rücklaufleitung für Fluid von den beiden Radmotoren 5 zurück zur Hydropumpe 10.

Der Hydraulikkreislauf 4 kann optional in an sich bekannter Weise ein Spülventil 9 aufweisen. Vorliegend ist das Spülventil als 3/3-Wegeventil ausgeführt. Sowohl die erste Arbeitsleitung 6 als auch die zweite Arbeitsleitung 7 sind über Hydraulikleitungen 9a mit dem Spülventil 9 verbunden. Das Spülventil 9 dient dazu, einen kleinen Anteil der geförderten Hydraulikflüssigkeit aus dem Hydraulikkreislauf 4 abzuzweigen. Das abgezweigte Öl wird über ein Drosselventil 13 und eine Rücklaufleitung 8 einem Ölvorrat (Öltank) 12 zugeführt. Das entnommene Öl wird über eine Speisepumpe 11 wieder dem Hydraulikkreislauf 4 über zwei Rückschlagventile zugeführt. Dadurch kann eine zu starke Erwärmung des Hydraulikkreislaufs 4 verhindert werden, da erwärmtes Öl fortlaufend aus dem Hydraulikkreislauf 4 abgezweigt wird und durch kühleres Öl aus dem gekühlten Ölvorrat 12 ersetzt wird.

Ferner weist der Hydraulikkreislauf 4 ein Druckbegrenzungsventil 18 (in diesem Dokument auch als drittes Druckbegrenzungsventil bezeichnet) auf, das sich ab einem fest voreingestellten Öffnungsdruck öffnet, um sicherzustellen, dass durch die Speisepumpe 11 kein zu hoher Druck erzeugt wird.

Der Hydraulikkreis 4 weist ferner ein variabel einstellbares erstes Druckbegrenzungsventil 14 auf, mittels dessen ein Fluidstrom in der ersten Arbeitsleitung 6 steuerbar ist. Der Hydraulickreis 4 weist ferner ein variabel einstellbares zweites Druckbegrenzungsventil 15 auf, mittels dessen ein Fluidstrom in der zweiten Arbeitsleitung 7 steuerbar ist. Bei der in Figur 1 gezeigten Ausführungsform mündet eine Niederdruckseite der Druckbegrenzungsventile 14 und 15 über eine Leitung 17 in den Ölvorrat 12.

Bei den variabel einstellbaren Druckbegrenzungsventilen 14 und 15 ist der Öffnungsdruck von null (kein Widerstand) bis zu einem Maximalwert variabel einstellbar. Der Maximalwert kann lediglich beispielhaft bei 420 bar liegen. Letztgenannter Wert dient als Absicherung und wird im Allgemeinen über ein mechanisches Bauteil, z. B. eine vorgespannte Feder, realisiert. Die beiden variabel einstellbaren Druckbegrenzungsventile 14 und 15 sind über einen elektrisch betätigbaren Steueranschluss 16 steuerbar. Die Druckbegrenzungsventile 14, 15 öffnen somit spätestens, wenn der anliegende Druck den Maximalwert übersteigt. Die Druckbegrenzungsventile 14, 15 öffnen jedoch früher, wenn der Öffnungsdruck auf einen niedrigeren Wert eingestellt wurde. Die Steueranschlüsse 16 der beiden Druckbegrenzungsventile 14 und 15 sind über elektrische Steuerleitungen (nicht gezeigt) mit einer Steuereinrichtung 3 verbunden. Die Steuereinrichtung 3 kann als ein separates Steuergerät oder als Teilfunktion eines zentralen Steuergeräts des Fahrzeugs, das auch andere Steuer- und/oder Regelaufgaben übernimmt, ausgeführt sein.

Die Steuereinrichtung 3 kann durch Ausgabe entsprechender Steuersignale im Fahrbetrieb jeweils den Öffnungsdruck der Druckbegrenzungsventile 14 und 15 für unterschiedliche Fahrsituationen zweckmäßig anpassen, um so bei Bedarf eines der Druckbegrenzungsventile 14 und 15 oder beide zu öffnen, um das Auftreten von unerwünschten Druckspitzen zu vermeiden. So kann in Fahrsituationen, in denen mit einem unerwünschten Druckaufbau in einer der Arbeitsleitungen 6, 7 gerechnet werden muss, der Öffnungsdruck des Druckbegrenzungsventils der jeweiligen Arbeitsleitung abgesenkt werden bzw. das Druckbegrenzungsventil geöffnet werden, so dass sich in der jeweiligen Arbeitsleitung des Hydraulikkreislaufs 4 keine Druckspitze oder kein unerwünscht hohes Druckniveau ausbilden kann.

Insbesondere ist die Ansteuerung der Druckbegrenzungsventile 14 und 15 davon abhängig, ob ein Schubbetrieb oder ein Zugbetrieb vorliegt. Ob ein Schubbetrieb oder ein Zugbetrieb vorliegt, kann üblicherweise aus dem Motorsteuergerät ausgelesen werden. Für die Unterscheidung von Zug- und Schubbetrieb dient primär das Drehmomentvorzeichen der Kurbelwelle (Motor). Weitere Signale wie Neigungswinkel, Gaspedalstellung, Betriebszustand der Betriebsbremse können ergänzend herangezogen werden. Fährt das Kraftfahrzeug bergab in der Ebene oder bergauf und wird zusätzlich über das Gaspedal beschleunigt, kann von einem Zugbetrieb ausgegangen werden. Ohne Gaspedal kann bei Bergabfahrt, Fahrt in der Ebene oder Bergauffahrt von Schubbetrieb gesprochen werden. Ist dabei das Getriebe in Neutralstellung, muss davon ausgegangen werden, dass weder Zug- noch Schubbetrieb gewünscht ist. Mit Raddrehzahlen und Fahrzeugneigungswinkel (längs, quer) können Achslasten bestimmt und zusammen mit Raddrehzahlsensoren z. B. für die ABS-Regelung nicht plausible Raddrehzahlen erfasst werden.

Der hydraulische Antrieb 1 ist so ausgelegt, dass die Hydropumpe 10 bei Geradeausfahrt so viel Öl in die erste Arbeitsleitung 6 (obere Ast in Figur 1) fördert, dass die Vorderräder 2a, 2b genauso schnell drehen "wollen" wie die Hinterräder (nicht gezeigt), die von der mechanisch angetriebenen Achse (nicht dargestellt) angetrieben werden. Der Druck in Arbeitsleitung 6 definiert sich durch den Strömungswiderstand im Hydraulikkreis 4 und der Drehzahldiskrepanz zwischen den Rädern der hydrostatischen Vorderachse und der mechanisch angetriebene Hinterachse, welche ebenfalls über ein festes Verhältnis die Hydropumpe 10 antreibt; drehen sich die Räder synchron, so stellt sich in der Arbeitsleitung 6 ein Druck ein, der im Wesentlichen vom Strömungswiderstand in Kreis 4 abhängt. Ist die Summendrehzahl der mechanisch angetriebenen Räder, welche über ein festes Verhältnis ebenfalls die Hydropumpe antreibt, größer als die Summendrehzahl der hydrostatischen Achse, dann steigt der Druck in Arbeitsleitung 6, da von der Hydropumpe mehr Öl gefördert wird, als die Radmotoren 5 aufnehmen. Umgekehrt, ist die Summendrehzahl der mechanisch angetriebenen Räder, welche über ein festes Verhältnis ebenfalls die Hydropumpe antreibt, kleiner als die Summendrehzahl der hydrostatischen Achse, dann fällt der Druck in Arbeitsleitung 6, da von der Hydropumpe weniger Öl gefördert wird, als die Radmotoren 5 aufnehmen. In diesem Fall wird der kleinste Druck in Arbeitsleitung 6 durch das Druckbegrenzungsventil 18 im Speisekreis bestimmt. Analog verhält es sich mit dem Druck in Arbeitsleitung 7. Bei synchroner Drehzahl der Räder ergibt sich in der Arbeitsleitung 7 im Wesentlichen der gleiche Druck wie in Arbeitsleitung 6, reduziert durch den Strömungswiderstand in Kreis 4. Kommt es zu einer Drehzahldiskrepanz zwischen den Rädern der hydrostatischen Vorderachse und der mechanisch angetriebene Hinterachse, welche ebenfalls über ein festes Verhältnis die Hydropumpe antreibt, so verhält sich das Druckniveau in Arbeitsleitung 7 umgekehrt zu Arbeitsleitung 6.

Vorstehend wurde bereits erwähnt, dass es zwei unterschiedliche Anwendungsfälle gibt. Beim ersten Anwendungsfall ist die hydraulisch angetriebene Achse (kurz: hydraulische Achse) die Lenkachse und die mechanisch angetriebene Achse (kurz: mechanische Achse) ist eine nicht gelenkte Achse. Bei diesem ersten Anwendungsfall gilt, dass bei Kurvenfahrt die Radsummendrehzahl der hydraulischen Achse immer größer ist als die Radsummendrehzahl der mechanischen Achse. Beim zweiten Anwendungsfall ist die hydraulisch angetriebene Achse die nicht lenkbare Achse und die mechanisch angetriebene Achse ist die Lenkachse. Bei diesem zweiten Anwendungsfall gilt, dass bei Kurvenfahrt die Radsummendrehzahl der mechanischen Achse immer größer ist als die Radsummendrehzahl der hydraulischen Achse.

Die Aussage, dass die einzelnen Räder einer gelenkten hydrostatischen Vorderachse immer schneller sind als die Räder der starren mechanischen Hinterachse stimmt aufgrund der unterschiedlichen Kurvenradien der beiden Räder einer Achse nicht immer. Dies gilt nur für die Summendrehzahl beider Räder einer Achse, d. h. in Summe ist die gelenkte Vorderachse immer schneller als die starre Hinterachse.

Die nachfolgenden Ausführungen beziehen sich auf den ersten Anwendungsfall, d. h., die hydrostatisch angetriebene Achse ist die lenkbare Achse. Bei einer Kurvenfahrt legen die Räder 2a, 2b der Vorderachse in Summe einen längeren Weg als die entsprechenden Räder der Hinterachse zurück; neben möglichen Schlupfunterschieden an den einzelnen Rädern bedingt durch ungleiche Reibwerte sorgt folglich auch die Fahrt entlang einer nicht geraden Bahn für eine Drehzahldiskrepanz zwischen den einzelnen Rädern. Die hydraulischen Radmotoren 5 benötigen in diesem Zustand mehr Öl, als die Hydropumpe 10 liefern kann. Folglich sinkt in der ersten Arbeitsleitung 6 der Druck, während in der zweiten Arbeitsleitung (Rücklauf) 7 der Druck steigt. Um zu vermeiden, dass sich in diesem Betriebszustand im Rücklauf 7 ein Druck aufbaut, öffnet die Steuereinrichtung das zweite Druckbegrenzungsventil 15. Dadurch fließt überschüssiges, durch die Radmotoren 5 gefördertes Öl über das zweite Druckbegrenzungsventil 15 zurück in den Ölvorrat 12. Der Ölmengenausgleich erfolgt über die Speisepumpe 11. Bei der in Figur 1 gezeigten Variante kann der Öffnungsdruck des zweiten Druckbegrenzungsventils 15 auf einen kleineren Druck eingestellt sein als der Öffnungsdruck des der Speisepumpe 11 nachgeschalteten festen Druckbegrenzungsventils 18.

Die Steuereinrichtung 3 ist somit eingerichtet, das zweite Druckbegrenzungsventil 15 zu öffnen, falls während eines Zugbetriebs des Kraftfahrzeugs eine Radsummendrehzahl der hydrostatisch angetriebenen Achse größer ist als eine Radsummendrehzahl einer von dem mechanischen Antriebsstrang angetriebenen Achse und wenn der Lenkwinkel, z. B. durch einen Lenkwinkelsensor aufgelöst, eine Kurvenfahrt signalisiert. Die Steuereinrichtung 3 ist mit anderen Worten ausgebildet, eine Differenzbildung der Raddrehzahlen zwischen der Summe der Raddrehzahlen an den Rädern der hydrostatisch angetriebenen Achse und der Summe der Raddrehzahlen an den Rädern der von dem mechanischen Antriebsstrang angetriebenen Achse, welche über ein festes Verhältnis mit der Drehzahl der Hochdruckpumpe gekoppelt ist, durchzuführen. Die Raddrehzahlen können von Raddrehzahlsensoren abgefragt werden, die z. B. einem Antiblockiersystem zugeordnet sind.

Die Raddrehzahl einer Achse hängt bei Vernachlässigung von Schlupfeffekten von der Fahrzeuggeschwindigkeit und vom Lenkwinkel α ab. In Figur 1 ist mit α1 der Lenkwinkel des bei der gezeigten Kurvenfahrt inneren Rads 2a und mit α2 der Lenkwinkel des äußeren Rads 2b bezeichnet. Hieraus ergibt sich ein mittlerer Lenkwinkel α der Räder 2a, 2b. Alternativ kann somit auch der Lenkwinkel bestimmt werden. Dieser Lenkwinkel steht über die Achskinematik in einem funktionalen Zusammenhang zum Lenkradwinkel. Der Lenkradwinkel kann in bekannter Weise mittels eines Winkelsensors bestimmt werden, der mit der Lenksäule des Kraftfahrzeugs in Verbindung steht und so den Drehwinkel des Lenkrads (Lenkradwinkel) erfasst. Alternativ ist auch denkbar, den Lenkwinkel an einem Rad der gelenkten Achse direkt zu messen und über kinematische Zwangsbedingungen auf den Winkel am zweiten Rad der Achse zu schließen. Die Sollraddrehzahlen bzw. die Solldrehzahlverhältnisse der einzelnen Räder können somit aus dem Kurvenradius bzw. dem Lenkradwinkel und aus der Fahrzeuggeschwindigkeit bestimmt werden.

Parallel zu den genannten Ausführungen ist es ferner möglich, dass auch das variable Druckbegrenzungsventil 14 des Vorlaufs 6 bedarfsgerecht geöffnet wird. Dies ist z. B. dann der Fall, wenn anhand anderer Signale erkannt wird, dass an der hydrostatisch angetriebenen Achse nicht das maximale Drehmoment übertragen werden kann. Durch gleichzeitige Reduzierung des Drucks im Vorlauf kann somit sichergestellt werden, dass kein Rad an der hydrostatischen Achse durchdreht.

Beispielsweise kann erkannt werden, dass an der hydrostatisch angetriebenen Achse nicht das volle bzw. maximale Drehmoment übertragen werden kann, falls während eines Zugbetriebs des Kraftfahrzeugs und bei Geradeaus- oder Kurvenfahrt eine Ist-Drehzahl eines Rades der hydrostatisch angetriebenen Achse von einer Soll-Drehzahl des Rades abweicht, beispielsweise wenn sich ein Rad der hydrostatisch angetriebenen Achse schneller dreht als es sollte. Die Sollraddrehzahlen ergeben sich aus der aktuellen Fahrgeschwindigkeit und dem aktuellen Kurvenradius einer Fahrt. Aus dem Kurvenradius ist ableitbar, wie viel sich die Vorderräder einer lenkbaren hydrostatisch angetriebenen Achse schneller drehen müssten als die Räder der nicht lenkbaren mechanisch angetriebenen Achse.

Beispielsweise kann die Steuereinrichtung daher ausgeführt sein, das erste Druckbegrenzungsventil zu öffnen, falls während eines Zugbetriebs (a) eine Ist-Drehzahl eines Rades der hydrostatisch angetriebenen Achse von einer Soll-Drehzahl des Rades abweicht und (b) diese Ist-Drehzahl größer ist als die Soll-Drehzahl.

In diesem Fall kann auf ein Schlupfproblem geschlossen werden, d. h. zumindest ein Rad der hydrostatischen Achse wird mit zu viel Öl versorgt. Durch das vorstehend beschriebene Öffnen des ersten Druckbegrenzungsventils kann dies in solchen Situationen verhindert werden.

Während eines Schubbetriebs ist das zweite Druckbegrenzungsventil 15 in der Regel geschlossen, um eine Bremswirkung übertragen zu können. Jedoch können Druckschwankungen im Rücklauf 7, die von einer Änderung des Lenkwinkels α oder einer Änderung des Radschlupfes resultieren, durch kurzeitiges bzw. teilweises Öffnen des Druckbegrenzungsventils 15 ausgeglichen werden.

Beispielsweise ist die Steuereinrichtung 3 ausgeführt, während eines Schubbetriebs und falls eine Radsummendrehzahl der hydrostatisch angetriebenen Achse größer als eine Radsummendrehzahl einer von der Brennkraftmaschine angetriebenen Achse ist, durch Ansteuern des zweiten Druckbegrenzungsventils den Druck im Rücklauf auf einen Solldruck einzuregeln. Die Steuereinrichtung kann hierzu beispielsweise ausgeführt sein, das Druckbegrenzungsventil bei Überschreitung des Solldrucks so lange zu öffnen, bis der Druck in der Rücklaufleitung wieder unter den Solldruck gefallen ist. Dadurch können kurvenfahrtbedingte oder schlupfbedingte Schwankungen des Drucks im Rücklauf ausgeglichen werden. Beispielsweise kann als Solldruck der zuletzt gemessene Druckwert im Rücklauf bzw. in der zweiten Arbeitsleitung, der vor Beginn eines Lenkvorgangs gemessen wurde, festgelegt werden.

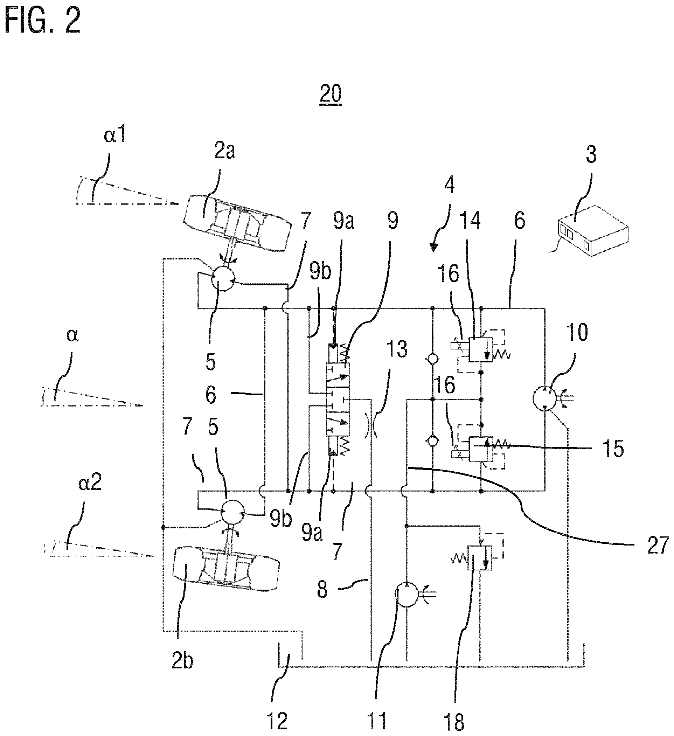

Figur 2 zeigt einen hydrostatischen Antrieb 20 gemäß einer weiteren alternativen Ausführungsform. Hierbei entsprechen Komponenten mit gleichen Bezugszeichen den Komponenten der Figur 1 und werden nicht gesondert beschrieben. Die Besonderheit der gezeigten Ausführungsform liegt darin, dass eine Niederdruckseite des ersten und/oder zweiten Druckbegrenzungsventils 14, 15 über eine Leitung 27 in den Speisekreis mündet und nicht in den Ölvorrat 12. Bei dieser Verschaltung bestimmt das fest installierte Druckbegrenzungsventil 18 den kleinsten möglichen Druck im Rücklauf 7 des Hochdruckkreises. Hier ist es somit sinnvoll, dass das entsprechend einstellbare Druckbegrenzungsventil als untere Schwelle für den Öffnungsdruck den Wert des Öffnungsdrucks des fest installierten Druckbegrenzungsventils 18 einnimmt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1, 20: Hydrostatischer Antrieb
- 2a, 2b: Rad
- 3: Steuergerät
- 4: Hydraulikkreislauf
- 5: Hydromotor, z. B. hydraulischer Einzelradmotor
- 6: Erste Arbeitsleitung (Vorwärtsfahrt Vorlauf)
- 7: Zweite Arbeitsleitung (Vorwärtsfahrt Rücklauf)
- 8, 17,27: Hydraulikleitung
- 9: Spülventil, z. B. 3/3-Wegeventil
- 9a: Hydraulikleitung
- 10: Hauptpumpe, z. B. Konstantpumpe
- 11: Speisepumpe
- 12: Ölvorrat
- 13: Drosselventil
- 14: Variabel einstellbares Druckventil
- 15: Variabel einstellbares Druckventil
- 16: Elektrischer Steueranschluss
- 18: Druckventil

## Patentansprüche

1. Hydrostatischer Antrieb (1; 20) für ein Kraftfahrzeug, umfassend
einen Hydraulikkreislauf (4), welcher eine von einem mechanischen Antriebsstrang angetriebene Hydropumpe (10) und mindestens einen Hydromotor (5) zum Antrieb einer hydrostatisch angetriebenen Achse sowie eine erste Arbeitsleitung (6) und eine zweite Arbeitsleitung (7) aufweist, wobei die erste Arbeitsleitung (6) in einem Vorwärtsfahrbetrieb die Vorlaufleitung für Fluid von der Hydropumpe (10) zu dem mindestens einen Hydromotor (5) bildet und die zweite Arbeitsleitung in einem Vorwärtsfahrbetrieb die Rücklaufleitung für Fluid von dem mindestens einen Hydromotor (5) zu der Hydropumpe (10) bildet, wobei die erste und die zweite Arbeitsleitung (6, 7) jeweils die Hydropumpe (10) und den mindestens einen Hydromotor (5) miteinander verbinden;
ein variabel einstellbares erstes Druckbegrenzungsventil (14), mittels dessen ein Fluidstrom in der ersten Arbeitsleitung (6) steuerbar ist;
ein variabel einstellbares zweites Druckbegrenzungsventil (15), mittels dessen ein Fluidstrom in der zweiten Arbeitsleitung (7) steuerbar ist; und
eine Steuereinrichtung (3), mittels derer jeweils ein Öffnungsdruck des ersten Druckbegrenzungsventils (14) und des zweiten Druckbegrenzungsventils (15) einstellbar ist,
**dadurch gekennzeichnet, dass**
die Steuereinrichtung (3) ausgeführt ist, während eines Zugbetriebs des Kraftfahrzeugs den Öffnungsdruck des zweiten Druckbegrenzungsventils (15) zu verringern.

2. Hydrostatischer Antrieb (1; 20) nach Anspruch 1, **dadurch gekennzeichnet, dass** ein Öffnungsdruck des ersten Druckbegrenzungsventils (14) elektrisch einstellbar ist und/oder ein Öffnungsdruck des zweiten Druckbegrenzungsventils (15) elektrisch einstellbar ist.

3. Hydrostatischer Antrieb nach Anspruch 1 oder 2, **gekennzeichnet durch** einen Speisekreis zur Speisung des Hydraulikkreislaufs (4), wobei der Speisekreis eine mit einem Vorrat (12) an Hydraulikflüssigkeit fluidisch verbundene Speisepumpe (11) und ein drittes Druckbegrenzungsventil (18) aufweist.

4. Hydrostatischer Antrieb (1; 20) nach einem der vorhergehenden Ansprüche, **gekennzeichnet durch** die Steuereinrichtung (3), mittels derer
das erste Druckbegrenzungsventil (14) und das zweite Druckbegrenzungsventil (15) unabhängig voneinander wahlweise in eine Öffnungsstellung oder eine Schließstellung bringbar sind.

5. Hydrostatischer Antrieb (1; 20) nach einem der vorhergehenden Ansprüche, **dadurch gekennzeichnet, dass** die Steuereinrichtung (3) ausgeführt ist, während eines Schubbetriebs des Kraftfahrzeugs den Öffnungsdruck des ersten Druckbegrenzungsventils (14) zu verringern.

6. Hydrostatischer Antrieb (1; 20) nach Anspruch 5, wenn abhängig von Anspruch 3, **dadurch gekennzeichnet,**
a) **dass** eine Niederdruckseite des ersten Druckbegrenzungsventils (14) in den Speisekreis mündet und die Steuereinrichtung (3) ausgeführt ist, während eines Schubbetriebs des Kraftfahrzeugs das erste Druckbegrenzungsventil (14) auf den gleichen Öffnungsdruck zu stellen wie das dritte Druckbegrenzungsventil (18); und/oder
b) **dass** eine Niederdruckseite des zweiten Druckbegrenzungsventils (15) in den Speisekreis mündet und die Steuereinrichtung (3) ausgeführt ist, während eines Zugbetriebs des Kraftfahrzeugs das zweite Druckbegrenzungsventil (15) auf den gleichen Öffnungsdruck zu stellen wie das dritte Druckbegrenzungsventil (18).

7. Hydrostatischer Antrieb (1; 20) nach Anspruch 5, wenn abhängig von Anspruch 3, **dadurch gekennzeichnet,**
a) **dass** eine Niederdruckseite des ersten Druckbegrenzungsventils (14) mit dem Vorrat (12) an Hydraulikflüssigkeit fluidisch verbunden ist und die Steuereinrichtung (3) ausgeführt ist, während eines Schubbetriebs des Kraftfahrzeugs das erste Druckbegrenzungsventil (14) auf einen Öffnungsdruck zu stellen, der kleiner oder gleich dem Öffnungsdruck des dritten Druckbegrenzungsventils (18) ist; und/oder
b) **dass** eine Niederdruckseite des zweiten Druckbegrenzungsventils (15) mit dem Vorrat (12) an Hydraulikflüssigkeit fluidisch verbunden ist und die Steuereinrichtung (3) ausgeführt ist, während eines Zugbetriebs des Kraftfahrzeugs das zweite Druckbegrenzungsventil (15) auf einen Öffnungsdruck zu stellen, der kleiner oder gleich dem Öffnungsdruck des dritten Druckbegrenzungsventils (18) ist.

8. Hydrostatischer Antrieb (1; 20) nach einem der vorhergehenden Ansprüche 5 bis 7, **dadurch gekennzeichnet, dass** die Steuereinrichtung (3) ausgeführt ist,
a) den Auslösedruck des ersten Druckbegrenzungsventils (14) zu reduzieren, falls während eines Zugbetriebs des Kraftfahrzeugs eine Ist-Drehzahl eines Rades der hydrostatisch angetriebenen Achse eine Soll-Drehzahl des gleichen Rades übersteigt; und/oder
b) den Auslösedruck des zweiten Druckbegrenzungsventils (15) zu reduzieren, falls während eines Schubbetriebs des Kraftfahrzeugs eine Ist-Drehzahl eines Rades der hydrostatischen Achse eine Soll-Drehzahl des gleichen Rades unterbietet.

9. Hydrostatischer Antrieb (1; 20) nach einem der vorhergehenden Ansprüche, **dadurch gekennzeichnet, dass** die Steuereinrichtung (3) ausgeführt ist, einen einzuregelnden Solldruck in den Arbeitsleitungen (6) und (7) in Abhängigkeit von einem gemessenen oder vorhergesagten Schlupfwert anzupassen.

10. Hydrostatischer Antrieb (1; 20) nach einem der vorhergehenden Ansprüche, **dadurch gekennzeichnet,**
a) **dass** die hydrostatisch angetriebene Achse mindestens einen hydraulischen Radmotor (5) umfasst; und/oder
b) **dass** die hydrostatisch angetriebene Achse in Vorwärtsfahrtrichtung des Kraftfahrzeugs gesehen vor oder hinter einer von dem mechanischen Antriebsstrang angetriebenen Achse angeordnet ist; und/oder
c) **dass** die hydrostatisch angetriebene Achse eine lenkbare oder nichtlenkbare Achse ist.

11. Kraftfahrzeugs, insbesondere Nutzfahrzeug, mit einem hydrostatischen Antrieb nach einem der vorhergehenden Ansprüche.

## Claims

1. A hydrostatic drive (1; 20) for a motor vehicle, comprising
a hydraulic circuit (4) which has a hydraulic pump (10), driven by a mechanical drivetrain, and has at least one hydraulic motor (5) for driving a hydrostatically driven axle and also has a first working line (6) and a second working line (7), wherein the first working line (6), in a forward driving operation, forms the supply line for fluid from the hydraulic pump (10) to the at least one hydraulic motor (5), and the second working line, in a forward driving operation, forms the return line for fluid from the at least one hydraulic motor (5) to the hydraulic pump (10), wherein the first and second working lines (6, 7) each connect the hydraulic pump (10) and the at least one hydraulic motor (5) to one another;
a variably settable first pressure-limiting valve (14) by means of which a fluid flow in the first working line (6) can be controlled;
a variably settable second pressure-limiting valve (15) by means of which a fluid flow in the second working line (7) can be controlled; and
a control device (3) by means of which in each case an opening pressure of the first pressure-limiting valve (14) and of the second pressure-limiting valve (15) can be set,
**characterized in that**
the control device (3) is configured to reduce the opening pressure of the second pressure-limiting valve (15) during a traction operation of the motor vehicle.

2. The hydrostatic drive (1; 20) according to Claim 1, **characterized in that** an opening pressure of the first pressure-limiting valve (14) is electrically settable and/or an opening pressure of the second pressure-limiting valve (15) is electrically settable.

3. The hydrostatic drive according to Claim 1 or 2, **characterized by** a feed circuit for feeding the hydraulic circuit (4), wherein the feed circuit has a feed pump (11), connected fluidically to a reservoir (12) of hydraulic fluid, and has a third pressure-limiting valve (18).

4. The hydrostatic drive (1; 20) according to one of the preceding claims, **characterized by** the control device (3), by means of which
the first pressure-limiting valve (14) and the second pressure-limiting valve (15) can, independently of one another, be selectively brought into an open position or a closed position.

5. The hydrostatic drive (1; 20) according to one of the preceding claims, **characterized in that** the control device (3) is configured to reduce the opening pressure of the first pressure-limiting valve (14) during an overrun operation of the motor vehicle.

6. The hydrostatic drive (1; 20) according to Claim 5 where dependent on Claim 3, **characterized**
a) **in that** a low-pressure side of the first pressure-limiting valve (14) opens out into the feed circuit and the control device (3) is configured to set the first pressure-limiting valve (14) to the same opening pressure as the third pressure-limiting valve (18) during an overrun operation of the motor vehicle; and/or
b) **in that** a low-pressure side of the second pressure-limiting valve (15) opens out into the feed circuit and the control device (3) is configured to set the second pressure-limiting valve (15) to the same opening pressure as the third pressure-limiting valve (18) during a traction operation of the motor vehicle.

7. The hydrostatic drive (1; 20) according to Claim 5 where dependent on Claim 3, **characterized**
a) **in that** a low-pressure side of the first pressure-limiting valve (14) is connected fluidically to the reservoir (12) of hydraulic fluid and the control device (3) is configured to set the first pressure-limiting valve (14) to an opening pressure which is lower than or equal to the opening pressure of the third pressure-limiting valve (18) during an overrun operation of the motor vehicle; and/or
b) **in that** a low-pressure side of the second pressure-limiting valve (15) is connected fluidically to the reservoir (12) of hydraulic fluid and the control device (3) is configured to set the second pressure-limiting valve (15) to an opening pressure which is lower than or equal to the opening pressure of the third pressure-limiting valve (18) during a traction operation of the motor vehicle.

8. The hydrostatic drive (1; 20) according to one of the preceding Claims 5 to 7, **characterized in that** the control device (3) is configured
a) to reduce the triggering pressure of the first pressure-limiting valve (14) if, during a traction operation of the motor vehicle, an actual rotational speed of a wheel of the hydrostatically driven axle exceeds a target rotational speed of the same wheel; and/or
b) to reduce the triggering pressure of the second pressure-limiting valve (15) if, during an overrun operation of the motor vehicle, an actual rotational speed of a wheel of the hydrostatic axle falls below a target rotational speed of the same wheel.

9. The hydrostatic drive (1; 20) according to one of the preceding claims, **characterized in that** the control device (3) is configured to adapt, in a manner dependent on a measured or predicted slip value, a target pressure, to be adjusted, in the working lines (6) and (7).

10. The hydrostatic drive (1; 20) according to one of the preceding claims, **characterized**
a) **in that** the hydrostatically driven axle comprises at least one hydraulic wheel motor (5); and/or
b) **in that** the hydrostatically driven axle, as seen in the forward driving direction of the motor vehicle, is arranged in front of or behind an axle which is driven by the mechanical drivetrain; and/or
c) **in that** the hydrostatically driven axle is a steerable or non-steerable axle.

11. A motor vehicle, in particular a utility vehicle, having a hydrostatic drive according to one of the preceding claims.

## Revendications

1. Entraînement hydrostatique (1 ; 20) pour un véhicule automobile, comprenant
un circuit hydraulique (4) qui présente une pompe hydraulique (10) entraînée par un groupe motopropulseur mécanique et au moins un moteur hydraulique (5) pour entraîner un essieu à entraînement hydrostatique, ainsi qu'une première conduite de travail (6) et une deuxième conduite de travail (7), la première conduite de travail (6) formant dans un mode en marche avant la conduite montante pour un fluide de la pompe hydraulique (10) audit au moins un moteur hydraulique (5), et la deuxième conduite de travail formant dans un mode en marche avant la conduite descendante pour un fluide de l'au moins un moteur hydraulique (5) à la pompe hydraulique (10), la première et la deuxième conduite de travail (6, 7) reliant respectivement la pompe hydraulique (10) et ledit au moins un moteur hydraulique (5) l'un à l'autre ;
une première soupape de limitation de pression (14) à réglage variable, permettant de commander un écoulement de fluide dans la première conduite de travail (6) ;
une deuxième soupape de limitation de pression (15) à réglage variable, permettant de commander un écoulement de fluide dans la deuxième conduite de travail (7) ; et
un dispositif de commande (3) permettant de régler respectivement une pression d'ouverture de la première soupape de limitation de pression (14) et de la deuxième soupape de limitation de pression (15),
**caractérisé en ce que** le dispositif de commande (3) est réalisé pour diminuer la pression d'ouverture de la deuxième soupape de limitation de pression (15) pendant un mode de traction du véhicule automobile.

2. Entraînement hydrostatique (1 ; 20) selon la revendication 1, **caractérisé en ce qu'**une pression d'ouverture de la première soupape de limitation de pression (14) est réglable électriquement, et/ou une pression d'ouverture de la deuxième soupape de limitation de pression (15) est réglable électriquement.

3. Entraînement hydrostatique selon la revendication 1 ou 2, **caractérisé par** un circuit d'alimentation pour alimenter le circuit hydraulique (4), le circuit d'alimentation présentant une pompe d'alimentation (11) en communication fluidique avec une réserve (12) de liquide hydraulique, et une troisième soupape de limitation de pression (18).

4. Entraînement hydrostatique (1 ; 20) selon l'une quelconque des revendications précédentes, **caractérisé par** le dispositif de commande (3) qui permet d'amener la première soupape de limitation de pression (14) et la deuxième soupape de limitation de pression (15) indépendamment l'une de l'autre sélectivement dans une position d'ouverture ou une position de fermeture.

5. Entraînement hydrostatique (1 ; 20) selon l'une quelconque des revendications précédentes, **caractérisé en ce que** le dispositif de commande (3) est réalisé pour diminuer la pression d'ouverture de la première soupape de limitation de pression (14) pendant un mode de poussée du véhicule automobile.

6. Entraînement hydrostatique (1 ; 20) selon la revendication 5 lorsqu'elle dépend de la revendication 3, **caractérisé**
a) **en ce qu'**un côté basse pression de la première soupape de limitation de pression (14) débouche sur le circuit d'alimentation, et le dispositif de commande (3) est réalisé pour régler la première soupape de limitation de pression (14) sur la même pression d'ouverture que la troisième soupape de limitation de pression (18) pendant un mode de poussée du véhicule automobile ; et/ou
b) **en ce qu'**un côté basse pression de la deuxième soupape de limitation de pression (15) débouche sur le circuit d'alimentation, et le dispositif de commande (3) est réalisé pour régler la deuxième soupape de limitation de pression (15) sur la même pression d'ouverture que la troisième soupape de limitation de pression (18) pendant un mode de traction du véhicule automobile.

7. Entraînement hydrostatique (1 ; 20) selon la revendication 5 lorsqu'elle dépend de la revendication 3, **caractérisé**
a) **en ce qu'**un côté basse pression de la première soupape de limitation de pression (14) est en communication fluidique avec la réserve (12) de liquide hydraulique, et le dispositif de commande (3) est réalisé pour régler la première soupape de limitation de pression (14) sur une pression d'ouverture qui est inférieure ou égale à la pression d'ouverture de la troisième soupape de limitation de pression (18) pendant un mode de poussée du véhicule automobile ; et/ou
b) **en ce qu'**un côté basse pression de la deuxième soupape de limitation de pression (15) est en communication fluidique avec la réserve (12) de liquide hydraulique, et le dispositif de commande (3) est réalisé pour régler la deuxième soupape de limitation de pression (15) sur une pression d'ouverture qui est inférieure ou égale à la pression d'ouverture de la troisième soupape de limitation de pression (18) pendant un mode de traction du véhicule automobile.

8. Entraînement hydrostatique (1 ; 20) selon l'une quelconque des revendications précédentes 5 à 7, **caractérisé en ce que** le dispositif de commande (3) est réalisé pour
a) réduire la pression de déclenchement de la première soupape de limitation de pression (14) si pendant un mode de traction du véhicule automobile une vitesse de rotation réelle d'une roue de l'essieu à entraînement hydrostatique dépasse une vitesse de rotation de consigne de la même roue ; et/ou
b) pour réduire la pression de déclenchement de la deuxième soupape de limitation de pression (15) si pendant un mode de poussée du véhicule automobile une vitesse de rotation réelle d'une roue de l'essieu hydrostatique soupasse une vitesse de rotation de consigne de la même roue.

9. Entraînement hydrostatique (1 ; 20) selon l'une quelconque des revendications précédentes, **caractérisé en ce que** le dispositif de commande (3) est réalisé pour adapter une pression de consigne à réguler dans les conduites de travail (6) et (7) en fonction d'une valeur de glissement mesurée ou prédite.

10. Entraînement hydrostatique (1 ; 20) selon l'une quelconque des revendications précédentes, **caractérisé**
a) **en ce que** l'essieu à entraînement hydrostatique comprend au moins un moteur sur roue hydraulique (5) ; et/ou
b) **en ce que** l'essieu à entraînement hydrostatique, vu dans le sens de la marche avant du véhicule automobile, est disposé avant ou après un essieu entraîné par le groupe motopropulseur mécanique ; et/ou
c) **en ce que** l'essieu à entraînement hydrostatique est un essieu dirigeable ou non dirigeable.

11. Véhicule automobile, en particulier véhicule utilitaire, comprenant un entraînement hydrostatique selon l'une quelconque des revendications précédentes.
